# EUROPEAN PATENT SPECIFICATION

(11) **EP 4 054 282 B1**
(45) Date of publication and mention of the grant of the patent: **27.08.2025**
(21) Application number: 22155756.4
(22) Date of filing: 09.02.2022
(51) Int. Cl.: H04W 76/19, H04W 36/30, H04W 76/15, H04W 92/04

(54) **PREVENTING DATA OUTAGE FOR USER EQUIPMENT DURING E-UTRAN NEW RADIO DUAL CONNECTIVITY PROCEDURE**
VERHINDERN VON DATENAUSFALLEN FÜR BENUTZERGERÄTE WÄHREND DES NEUEN FUNKVERBINDUNGSVERFAHRENS VON E-UTRAN
PRÉVENTION D'INTERRUPTION DE DONNÉES POUR UN ÉQUIPEMENT UTILISATEUR PENDANT UNE PROCÉDURE DE CONNECTIVITÉ DOUBLE DE NOUVELLE RADIO E-UTRAN

(30) Priority: 02.03.2021 IN 202141008774
(43) Date of publication of application: 07.09.2022
(73) Proprietor: Nokia Solutions and Networks Oy, 02610 Espoo (FI)
(72) Inventor: ROKKAPPANAVARA, Badrinath, 560037 Bangalore (IN); HB, Mallikarjuna, 560091 Bangalore (IN); BGPURA NANJUNDASWAMY, Santhosh, 560097 Bangalore (IN); KORDYBACH, Krzysztof, 51-691 Wroclaw (PL)
(74) Representative: Laine IP Oy

(56) References cited:
- WO-A1-2015/098951
- WO-A1-2018/062286
- "3rd Generation Partnership Project; Technical Specification Group Radio Access Network; Evolved Universal Terrestrial Radio Access (E-UTRA) and NR; Multi-connectivity; Stage 2 (Release 16)", vol. RAN WG2, no. V16.4.0, 6 January 2021 (2021-01-06), pages 1 - 84, XP051999626, Retrieved from the Internet <URL:https://ftp.3gpp.org/Specs/archive/37_series/37.340/37340-g40.zip 37340-g40.docx> [retrieved on 20210106]
- "3rd Generation Partnership Project; Technical Specification Group Radio Access Network; NR; NR and NG-RAN Overall Description; Stage 2 (Release 16)", vol. RAN WG2, no. V16.4.0, 6 January 2021 (2021-01-06), pages 1 - 149, XP051999690, Retrieved from the Internet <URL:https://ftp.3gpp.org/Specs/archive/38_series/38.300/38300-g40.zip 38300-g40.docx> [retrieved on 20210106]

## Description

### FIELD:

The invention relates to apparatuses, and methods for preventing data outage for user equipment (UE) during Evolved Universal Mobile Telecommunications System Terrestrial Radio Access Network (E-UTRAN) New Radio Dual Connectivity (EN-DC).

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. Fifth generation (5G) wireless systems refer to the next generation (NG) of radio systems and network architecture. 5G is mostly built on a new radio (NR), but the 5G (or NG) network can also build on E-UTRAN radio. It is estimated that NR will provide bitrates on the order of 10-20 Gbit/s or higher, and will support at least enhanced mobile broadband (eMBB) and ultra-reliable low-latency-communication (URLLC) as well as massive machine type communication (mMTC). NR is expected to deliver extreme broadband and ultra-robust, low latency connectivity and massive networking to support the Internet of Things (IoT). With IoT and machine-to-machine (M2M) communication becoming more widespread, there will be a growing need for networks that meet the needs of lower power, low data rate, and long battery life. It is noted that, in 5G, the nodes that can provide radio access functionality to a user equipment (i.e., similar to Node B in UTRAN or eNB in LTE) are named gNB when built on NR radio and named NG-eNB when built on E-UTRAN radio. Document WO2018062286 discusses the transfer of back-haul characteristics such as available bandwidth and reliability from a secondary node to a master node.

SUMMARY The invention is defined by the independent claims. Advantageous embodiments of the invention are given in the dependent claims.

### BRIEF DESCRIPTION OF THE DRAWINGS:

For proper understanding of example embodiments, reference should be made to the accompanying drawings, wherein:
FIG. 1(a) illustrates an example of a successful user equipment (UE) data connectivity during an Evolved Universal Mobile Telecommunications System Terrestrial Radio Access Network (E-UTRAN) New Radio Dual Connectivity (EN-DC) procedure.
FIG. 1(b) illustrates an example of data outage at the UE due to S1/NG user plane interface (S1-U/NG-U) path failure during an EN-DC procedure.
FIG. 2 illustrates an example of a network topology and S1-U/NG-U path status table at a master node/MeNB, according to certain example embodiments.
FIG. 3 illustrates an example of a secondary node/en-gNB/SgNB selection logic with additional selection criteria, according to certain example embodiments.
FIG. 4 illustrates an example gNB status indication procedure, according to certain example embodiments.
FIG. 5 illustrates an example flow diagram of a method, according to certain example embodiments.
FIG. 6 illustrates an example flow diagram of another method, according to certain example embodiments.
FIG. 7(a) illustrates an apparatus, according to certain example embodiments.
FIG. 7(b) illustrates another apparatus, according to certain example embodiments.

### SUMMARY

According some aspects, there is provided the subject matter of the independent claims. Some further aspects are defined in the dependent claims. The embodiments that do not fall under the scope of the claims are to be interpreted as examples useful for understanding the disclosure.

### DETAILED DESCRIPTION:

It will be readily understood that the components of certain example embodiments, as generally described and illustrated in the figures herein, may be arranged and designed in a wide variety of different configurations. The following is a detailed description of some example embodiments of systems, methods, apparatuses, and computer program products for preventing data outage for user equipment (UE) during Evolved Universal Mobile Telecommunications System Terrestrial Radio Access Network (E-UTRAN) New Radio Dual Connectivity (EN-DC).

The features, structures, or characteristics of example embodiments described throughout this specification may be combined in any suitable manner in one or more example embodiments. For example, the usage of the phrases "certain embodiments," "an example embodiment," "some embodiments," or other similar language, throughout this specification refers to the fact that a particular feature, structure, or characteristic described in connection with an embodiment may be included in at least one embodiment. Thus, appearances of the phrases "in certain embodiments," "an example embodiment," "in some embodiments," "in other embodiments," or other similar language, throughout this specification do not necessarily refer to the same group of embodiments, and the described features, structures, or characteristics may be combined in any suitable manner in one or more example embodiments. Additionally, "MeNB" may be interchangeably used as "master node" or "master node/MeNB", or individually used as "MeNB" and "master node". "MeNB" may also have an equivalent meaning as "master node". Further "en-gNB/SgNB" may be interchangeably used as "secondary node/en-gNB/SgNB", or individually used as "secondary node", "en-gNB" or "SgNB". Additionally, "secondary node", "en-gNB", and SgNB may have an equivalent meaning. Furthermore, "S1-U" may be interchangeably used as "S1-U", "NG-U", or "S1-U/NG-U", or individually used as "S1-U", "NG-U", or "S1-U/NG-U". Each of "S1-U" and "NG-U" may also have an equivalent meaning.

In some cases, general packet radio service (GPRS) tunneling protocol for user plane (GTP-U) failure may arise due to switch/router upgradation, or intermediate hardware failure (switch/router) in an IP network, which sometimes need operator intervention to restore it back to stock. 3^{rd} Generation Partnership Project (3GPP) describes GTP-U path failure handling at the access network and core network, respectively. For example, 3GPP describes, for path failure, a node detecting the GTP-U path failure with its peer may notify the upper layer of the path failure so that the user equipment (UE) can be disconnected from the network, and can retry the attach procedure. 3GPP also describes path failure in the serving gateway (SGW) and the mobility management entity (MME). For example, the SGW may detect the GTP-U path failure with its peer and notify the MME. The MME may in turn allocate another SGW for the bearer or release the bearer. Furthermore, the MME may derive the S1-U/NG-U path information (e.g., the eNB fully qualified tunnel endpoint identifier (F-TEID) and the SGW F-TEID) from the UE context, and mark it as failed. In addition, the MME may store such information for a configurable period. The MME may also avoid selecting the SGW with a failed S1-U/NG-U path towards the eNB for subsequent packet data network (PDN) connection establishment procedures and mobility procedures with SGW relocation.

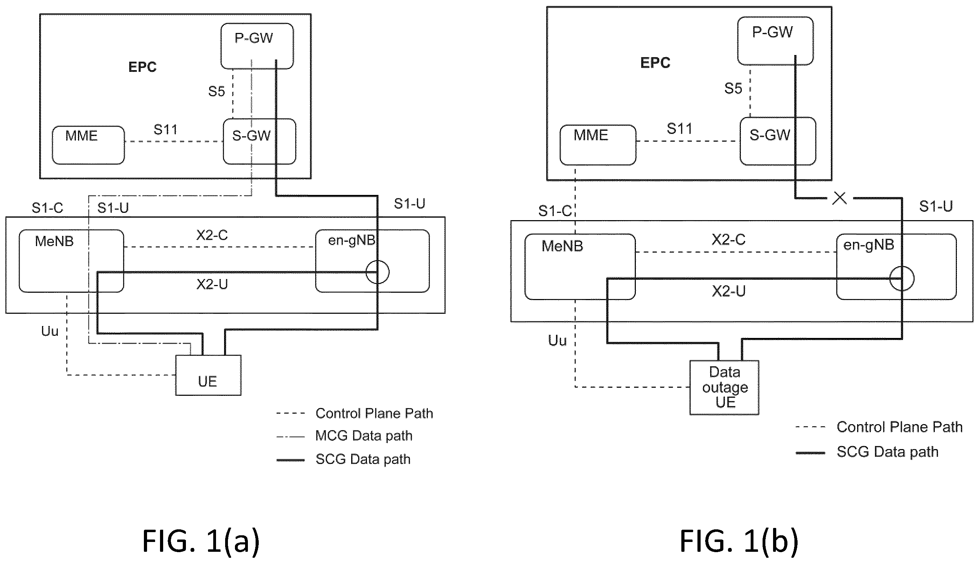

FIG. 1(a) illustrates an example of a successful UE data connectivity during an EN-DC procedure, and FIG. 1(b) illustrates an example of data outage at the UE due to S1-U/NG-U path failure during an EN-DC procedure. In certain cases, during an EN-DC procedure, the MME may select the SGW based on the path status between the master node/MeNB and the SGW. However, in other cases, the MME may not consider the path status between the secondary node/en-gNB/SgNB and the SGW since the secondary node/en-gNB/SgNB selection logic resides at the master node/MeNB. If in case the GTP-U path status between the secondary node/en-gNB/SgNB and the SGW is not reachable, the UE may still successfully attach to the network, and as a result, no radio link failures are detected. In such a case, the attached UE may experience data outage until the GTP-U path is restored. In addition, the radio resource control (RRC) re-establishment or re-attach procedure may result in data outage if the GTP-U path is not restored as the same entities may be allocated again.

According to the invention, when the GTP-U path failure is identified by the secondary node/en-gNB/SgNB, the status is indicated to the master node/MeNB. Based on the received path status, the master node/MeNB may avoid the selection of such paths (e.g., en-gNB SGW pair) experiencing the path failure for a secondary gNodeB (SgNB) addition procedure. As such, the UE with dual connectivity capability may not have a secondary cell group (SCG) bearer established involving the path having the failure. Accordingly, it may be possible to avoid experiencing data outage due to the broken link.

In certain example embodiments, to indicate the status of the path failure, the secondary node/en-gNB/SgNB may adapt the existing "gNB Status Indication Message" to update the peer master node/MeNB. Alternatively, in other example embodiments, the secondary node/en-gNB/SgNB may introduce a new message to indicate the status to all the master nodes/MeNBs to which it has X2 setup successfully. According to certain example embodiments, by maintaining the status of the paths between the secondary node/en-gNB/SgNB and SGWs, the master node/MeNB can select an alternative secondary node/en-gNB/SgNB that does not have any connectivity issues with the SGW provided by the MME. According to other example embodiments, the master node/MeNB may request for a different SGW from the MME when there are no alternate secondary nodes/en-gNBs/SgNBs available.

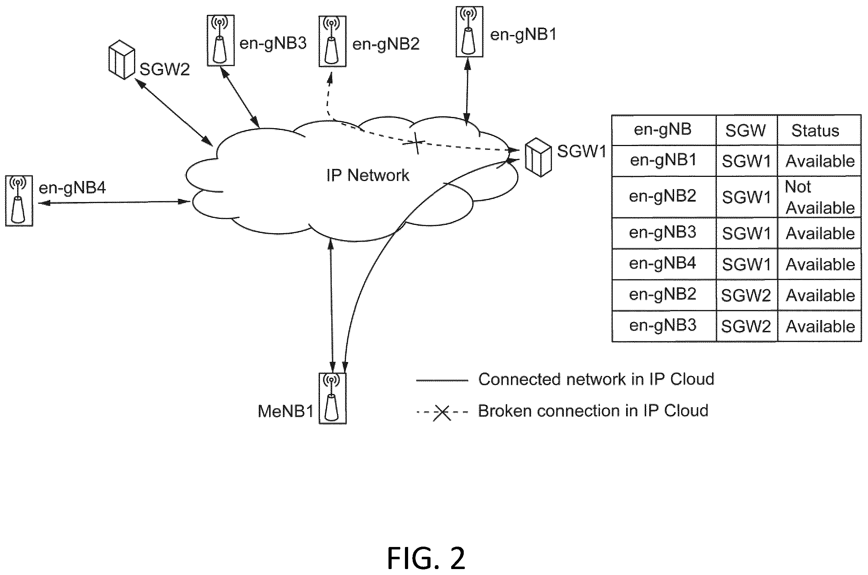

FIG. 2 illustrates an example of a network topology and S1-U/NG-U path status table at the master node/MeNB, according to certain example embodiments. In particular, FIG. 2 illustrates an example of a network deployment where the eNB, secondary node/en-gNB/SgNB, and SGW are connected via an IP network. According to certain example embodiments, the master node/MeNB may maintain connectivity status information as shown in table 200 of FIG. 2. Specifically, the table 200 includes the S 1-U/NG-U path status for all the peer secondary nodes/en-gNBs/SgNBs of the master node/MeNB.

In certain example embodiments, the master node/MeNB may receive the status of the paths from the secondary node/en-gNB/SgNB peers through various mechanisms. For example, in some example embodiments, the master node/MeNB may receive status of the paths from secondary node/en-gNB/SgNB peers via an adapted gNB status indication message. In other example embodiments, the master node/MeNB may receive status of the paths from secondary node/en-gNB/SgNB peers via a GTP-U status indication message, which may be a unicast message or a broadcast message.

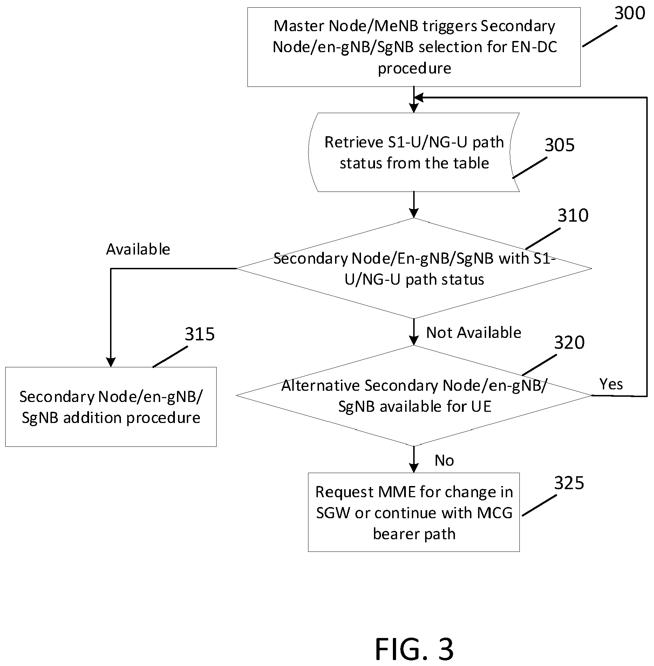

According to certain example embodiments, the master node/MeNB may include S1-U/NG-U path status as an additional criteria while selecting a secondary node/en-gNB/SgNB so that the secondary node/en-gNB/SgNB selected for SCG bearer may not cause data outage at the UE (see FIG. 3 with secondary node/en-gNB/SgNB selection logic with additional selection criteria). According to other example embodiments, the master node/MeNB may include S1-U/NG-U path status as additional criteria for rejecting an E-UTRAN radio access bearer (eRAB) establishment with a suitable cause for the MME to allocate another available SGW for the S1-U/NG-U bearer establishment to provide NR data throughput. In this example, the rejection logic is illustrated in the example of FIG. 3 discussed herein.

FIG. 3 illustrates an example of an secondary node/en-gNB/SgNB selection logic with additional selection criteria, according to certain example embodiments. As illustrated in FIG. 3, at 300, the master node/MeNB may trigger a secondary node/en-gNB/SgNB selection for an EN-DC procedure based on, for example, UE measurement information. At 305, the master node/MeNB may retrieve S1-U/NG-U status (i.e., GTP-U path status, whether there is a failure) from the information table 200 illustrated in FIG. 2. At 310, the master node/MeNB may determine whether the S1-U/NG-U path status of the secondary node/en-gNB/SgNB has been obtained. If the S1-U/NG-U path status has been obtained and is determined as having an "available" status, then, at 315, the master node/MeNB may initiate SgNB addition procedure to establish a connection between the MeNB and secondary node/en-gNB/SgNB. However, if it is determined that the S1-U/NG-U path status has an "unavailable" status, then, at 320, the master node/MeNB may determine whether an alternative secondary node/en-gNB/SgNB is available for the UE. If no, at 325, the master node/MeNB may request the MME to change the SGW or continue with the master cell group (MCG) bearer path. On the other hand, if an alternative secondary node/en-gNB/SgNB is available for the UE, the procedure may return to 305 where the master node/MeNB may retrieve the S1-U/NG-U path status of the alternative secondary node/en-gNB/SgNB from the table.

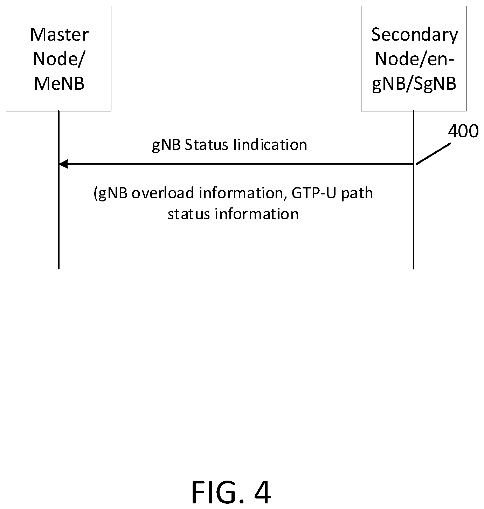

FIG. 4 illustrates an example gNB status indication procedure, according to certain example embodiments. At 400, the secondary node/en-gNB/SgNB may send a gNB status indication message to the master node/MeNB. According to certain example embodiments, the gNB status indication message may include gNB overload information and/or GTP-U path status information. Further, Table 1 lists several examples of the gNB status indication and their contents.

**Table 1: gNB Status Indication**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.13 | | YES | Ignore |
| gNB Overload Information | M | | ENUMERATED (overloaded, not-overloaded, ...) | | YES | ignore |
| Interface Instance Indication | O | | 9.2.143 | | YES | Reject |
| S1-U Path Status Information | O | | | | YES | Ignore |

Table 2 lists certain examples of the S 1-U/NG-U path information. According to certain example embodiments, this information element (IE) may provide information on the S 1-U/NG-U supervision status. Further, Table 3 lists certain examples of the S 1-U/NG-U interface events. According to certain example embodiments, the events upon which S 1-U/NG-U path status may be communicated to the master node/MeNB may include those listed in Table 3. In addition, Table 4 lists certain examples of GTP-U status indication information. According to certain example embodiments, the GTP-U status indication information may be sent as a message by the secondary node/en-gNB/SgNB to indicate to the eNB its status of S1-U/NG-U path.

**Table 2: S1-U/NG-U Path Status Information**

| **IE/Group Name** | | | **Presence** | **Range** | **IE type and reference** | **Semantics description** |
|---|---|---|---|---|---|---|
| **S1U Path List** | | | | *1* | | |
| | **>Path Item** | | | *1..< maxnoofSluPath* | | |
| | | >>SGW IP Address | M | | BIT STRING (1..160, ...) | SGW's Transport Layer Address |
| | | >>en-**gNB IP Address** | M | | BIT STRING (1..160, ...) | en-gNB's Transport Layer Address |
| | | >>Status | M | ENUMERATED (Available, NotAvailable, ...) | | |

| **Range bound** | **Explanation** |
|---|---|
| *maxnoofSluPath* | 255 |

**Table 3: S1-U/NG-U Interface Events**

| **Event** | **Message** | **Direction** | **Status IE** |
|---|---|---|---|
| S1-U Path Failure | GNB STATUS INDICATION | En-gNB->MeNB | Not Available |
| S1-U Path Establishment | GNB STATUS INDICATION | En-gNB->MeNB | Available |

**Table 4: GTP-U Status Indication**

| **IE/Group Name** | **Presence** | **Range** | **IE type and reference** | **Semantics description** | **Criticality** | **Assigned Criticality** |
|---|---|---|---|---|---|---|
| Message Type | M | | | | YES | ignore |
| S1-U Path Status Information | M | | | | YES | Ignore |

In certain example embodiments, on occurrence of events (see Table 3) over the S1-U/NG-U interface, the secondary node/en-gNB/SgNB may send a gNB status indication message (see Table 1) including optional S1-U/NG-U path status information IE (see Table 2) to indicate the S1-U/NG-U path status. Alternatively, in other example embodiments, the S1-U/NG-U status information may be communicated via a new message GTP-U status indication message (see Table 4).

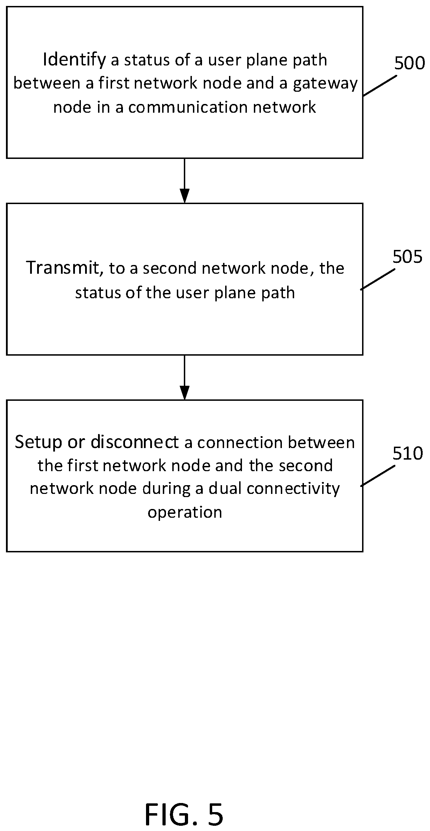

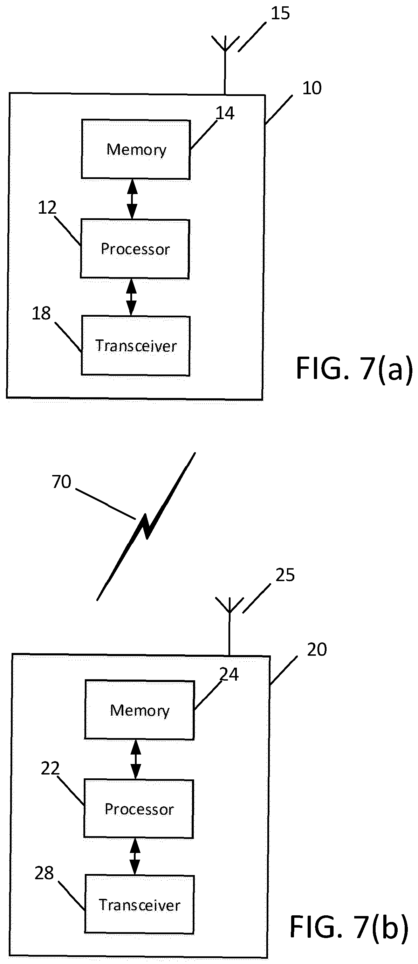

FIG. 5 illustrates an example flow diagram of a method, according to certain example embodiments. In an example embodiment, the method of FIG. 5 may be performed by a network entity, network node, or a group of multiple network elements in a 3GPP system, such as LTE or 5G-NR. For instance, in an example embodiment, the method of FIG. 5 may be performed by a secondary node/en-gNB/SgNB, for instance similar to apparatus 20 illustrated in FIG. 7(a).

According to certain example embodiments, the method of FIG. 5 may include, at 500, identifying a status of a user plane path between a first network node and a gateway node in a communication network. The method may also include, at 505, transmitting, to a second network node, the status of the user plane path. The method may further include, at 510, setting up or disconnecting a connection between the first network node and the second network node during a dual connectivity operation.

According to certain example embodiments, the status of the user plane path may include a failure status or recovered status. According to other example embodiments, the status may be transmitted to the second network node via a network node status indication message, a general packet radio service tunneling protocol for user plane (GTP-U) status indication message, or any other message between the first network node and the second network node. According to further example embodiments, the GTP-U status indication message may be a unicast message or a broadcast message.

In certain example embodiments, the network node status indication message may include GTP-U path status information along with overload information. In other example embodiments, the network node status indication message may include S1 user plane interface path status information to indicate an S1 user plane interface path status. In some example embodiments, the S1 user plane interface path status information may be communicated via a new GTP-U status indication message.

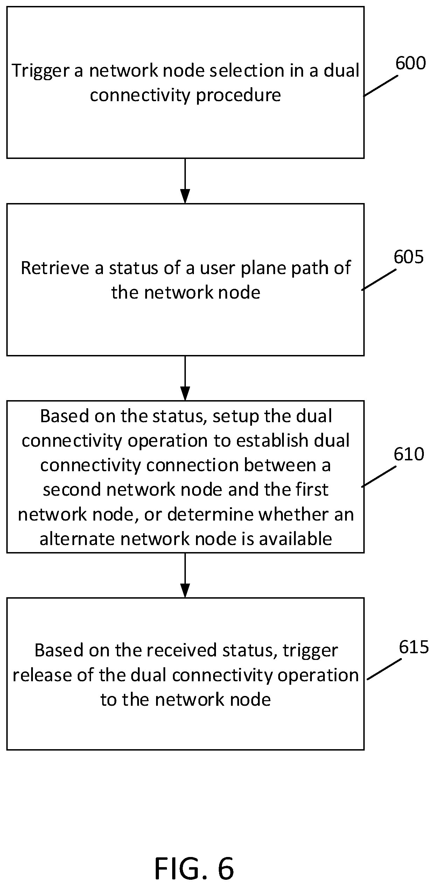

FIG. 6 illustrates an example flow diagram of another method, according to certain example embodiments. In an example embodiment, the method of FIG. 6 may be performed by a network entity, network node, or a group of multiple network elements in a 3GPP system, such as LTE or 5G-NR. For instance, in an example embodiment, the method of FIG. 6 may be performed by a master node/MeNB, for instance similar to apparatus 20 illustrated in FIG. 7(b).

According to certain example embodiments, the method of FIG. 6 may include, at 600, triggering a first network node selection in a dual connectivity operation. The method may also include, at 605, retrieving a status of a user plane path of the first network node. The method may further include, at 610, based on the received status, setting up the dual connectivity operation to establish a dual connectivity connection between a second network node and the first network node, or determining whether an alternate network node is available. The method may further include, at 615, based on the received status, triggering release of the dual connectivity operation to the first network node.

According to certain example embodiments, when it is determined that an alternate network node is not available, the method may also include requesting a mobility management entity for a different gateway node, or continuing a connection with a master cell group bearer path. According to other example embodiments, when it is determined that an alternative network node is available, the method may further include retrieving the status of the user plane path of the alternative network node. According to further example embodiments, the status may be retrieved via a network node status indication message, or a general packet radio service tunneling protocol for user plane (GTP-U) status indication message.

In certain example embodiments, the GTP-U status indication message may be a unicast message or a broadcast message. In some example embodiments, the network node status indication message may include GTP-U path status information along with overload information. In other example embodiments, the network node status indication message may include S1 user plane interface path status information to indicate an S1 user plane interface path status. In further example embodiments, the S1 user plane interface path status information is communicated via a new GTP-U status indication message.

FIG. 7(a) illustrates an apparatus 10 according to certain example embodiments. In certain example embodiments, apparatus 10 may be a node or element in a communications network or associated with such a network, such as a UE, mobile equipment (ME), mobile station, mobile device, stationary device, or other device. In other example embodiments, apparatus 10 may be an eNB/gNB. It should be noted that one of ordinary skill in the art would understand that apparatus 10 may include components or features not shown in FIG. 7(a).

In some example embodiments, apparatus 10 may include one or more processors, one or more computer-readable storage medium (for example, memory, storage, or the like), one or more radio access components (for example, a modem, a transceiver, or the like), and/or a user interface. In some example embodiments, apparatus 10 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 10 may include components or features not shown in FIG. 7(a).

As illustrated in the example of FIG. 7(a), apparatus 10 may include or be coupled to a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 12 is shown in FIG. 7(a), multiple processors may be utilized according to other example embodiments. For example, it should be understood that, in certain example embodiments, apparatus 10 may include two or more processors that may form a multiprocessor system (e.g., in this case processor 12 may represent a multiprocessor) that may support multiprocessing. According to certain example embodiments, the multiprocessor system may be tightly coupled or loosely coupled (e.g., to form a computer cluster).

Processor 12 may perform functions associated with the operation of apparatus 10 including, as some examples, precoding of antenna gain/phase parameters, encoding and decoding of individual bits forming a communication message, formatting of information, and overall control of the apparatus 10, including processes illustrated in FIGs. 1-6.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media. The instructions stored in memory 14 may include program instructions or computer program code that, when executed by processor 12, enable the apparatus 10 to perform tasks as described herein.

In certain example embodiments, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10 to perform any of the methods illustrated in FIGs. 1-6.

In some example embodiments, apparatus 10 may also include or be coupled to one or more antennas 15 for receiving a downlink signal and for transmitting via an uplink from apparatus 10. Apparatus 10 may further include a transceiver 18 configured to transmit and receive information. The transceiver 18 may also include a radio interface (e.g., a modem) coupled to the antenna 15. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an uplink.

For instance, transceiver 18 may be configured to modulate information on to a carrier waveform for transmission by the antenna(s) 15 and demodulate information received via the antenna(s) 15 for further processing by other elements of apparatus 10. In other example embodiments, transceiver 18 may be capable of transmitting and receiving signals or data directly. Additionally or alternatively, in some example embodiments, apparatus 10 may include an input and/or output device (I/O device). In certain example embodiments, apparatus 10 may further include a user interface, such as a graphical user interface or touchscreen.

In certain example embodiments, memory 14 stores software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software. According to certain example embodiments, apparatus 10 may optionally be configured to communicate with apparatus 20 via a wireless or wired communications link 70 according to any radio access technology, such as NR.

According to certain example embodiments, processor 12 and memory 14 may be included in or may form a part of processing circuitry or control circuitry. In addition, in some example embodiments, transceiver 18 may be included in or may form a part of transceiving circuitry.

FIG. 7(b) illustrates an apparatus 20 according to certain example embodiments. In certain example embodiments, the apparatus 20 may be a node or element in a communications network or associated with such a network, such as a base station, a Node B, an evolved Node B (eNB), 5G Node B or access point, next generation Node B (NG-NB or gNB), master node/MeNB, secondary node/en-gNB/SgNB and/or WLAN access point, associated with a radio access network (RAN), such as an LTE network, 5G or NR. It should be noted that one of ordinary skill in the art would understand that apparatus 20 may include components or features not shown in FIG. 7(b).

As illustrated in the example of FIG. 7(b), apparatus 20 may include a processor 22 for processing information and executing instructions or operations. Processor 22 may be any type of general or specific purpose processor. For example, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in FIG. 7(b), multiple processors may be utilized according to other example embodiments. For example, it should be understood that, in certain example embodiments, apparatus 20 may include two or more processors that may form a multiprocessor system (e.g., in this case processor 22 may represent a multiprocessor) that may support multiprocessing. In certain example embodiments, the multiprocessor system may be tightly coupled or loosely coupled (e.g., to form a computer cluster).

According to certain example embodiments, processor 22 may perform functions associated with the operation of apparatus 20, which may include, for example, precoding of antenna gain/phase parameters, encoding and decoding of individual bits forming a communication message, formatting of information, and overall control of the apparatus 20, including processes illustrated in FIGs. 1-6.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can be comprised of any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein.

In certain example embodiments, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20 to perform the methods illustrated in FIGs. 1-6.

In certain example embodiments, apparatus 20 may also include or be coupled to one or more antennas 25 for transmitting and receiving signals and/or data to and from apparatus 20. Apparatus 20 may further include or be coupled to a transceiver 28 configured to transmit and receive information. The transceiver 28 may include, for example, a plurality of radio interfaces that may be coupled to the antenna(s) 25. The radio interfaces may correspond to a plurality of radio access technologies including one or more of GSM, NB-IoT, LTE, 5G, WLAN, Bluetooth, BT-LE, NFC, radio frequency identifier (RFID), ultrawideband (UWB), MulteFire, and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (for example, via an uplink).

As such, transceiver 28 may be configured to modulate information on to a carrier waveform for transmission by the antenna(s) 25 and demodulate information received via the antenna(s) 25 for further processing by other elements of apparatus 20. In other example embodiments, transceiver 18 may be capable of transmitting and receiving signals or data directly. Additionally or alternatively, in some example embodiments, apparatus 20 may include an input and/or output device (I/O device).

In certain example embodiment, memory 24 may store software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software.

According to some example embodiments, processor 22 and memory 24 may be included in or may form a part of processing circuitry or control circuitry. In addition, in some example embodiments, transceiver 28 may be included in or may form a part of transceiving circuitry.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to cause an apparatus (e.g., apparatus 10 and 20) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

For instance, in certain example embodiments, apparatus 20 may be controlled by memory 24 and processor 22 to identify a status of a user plane path between the apparatus and a gateway node in a communication network. Apparatus 20 may also be controlled by memory 24 and processor 22 to transmit, to a network node, the status of the user plane path. Apparatus 20 may further be controlled by memory 24 and processor 22 to setup or disconnect a connection between the apparatus and the second network node during a dual connectivity operation.

In other example embodiments, apparatus 20 may be controlled by memory 24 and processor 22 to trigger a first network node selection in a dual connectivity operation. Apparatus 20 may also be controlled by memory 24 and processor 22 to retrieve a status of a user plane path of the first network node. Apparatus 20 may further be controlled by memory 24 and processor 22 to, based on the status, setup the dual connectivity operation to establish a dual connectivity connection between a second network node and the first network node, or determine whether an alternate network node is available. Apparatus 20 may also be controlled by memory 24 and processor 22 to, based on the received status, trigger release of the dual connectivity operation to the first network node.

Certain example embodiments may be directed to an apparatus that includes means for identifying a status of a user plane path between a first network node and a gateway node in a communication network. The apparatus may also include means for transmitting, to a second network node, the node of the user plane path. The apparatus may further include means for setting up or disconnecting a connection between the first network node and the second network node during a dual connectivity operation.

Other example embodiments may be directed to an apparatus that includes means for triggering a network node selection in a dual connectivity operation. The apparatus may also include means for retrieving a status of a user plane path of the network node. The apparatus may further include means for, based on the received status, setting up the dual connectivity operation to establish a dual connectivity connection between the network node and the apparatus, or determining whether an alternate network node is available. The apparatus may also include means for, based on the received status, triggering release of the dual connectivity operation to the network node.

Certain example embodiments described herein provide several technical improvements, enhancements, and /or advantages. In some example embodiments, it may be possible for the master node/MeNB to avoid selection of a GTP-U path experiencing path failure for an SgNB addition procedure. As such, the UE with dual connectivity capability may avoid having an SCG bearer established involving the path with the failure. In addition, the UE would be able to avoid experiencing data outage due to the broken link.

A computer program product not according to the invention as defined in the claims and presented for illustration purposes only is provided and may include one or more computer-executable components which, when the program is run, are configured to carry out some example embodiments. The one or more computer-executable components may be at least one software code or portions of it. Modifications and configurations required for implementing functionality of certain example embodiments may be performed as routine(s), which may be implemented as added or updated software routine(s). Software routine(s) may be downloaded into the apparatus.

As an software or a computer program code or portions of it may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (e.g., apparatus 10 or apparatus 20), for example through the use of an application specific integrated circuit (ASIC), a programmable gate array (PGA), a field programmable gate array (FPGA), or any other combination of hardware and software. In yet another example embodiment, the functionality may be implemented as a signal, a non-tangible means that can be carried by an electromagnetic signal downloaded from the Internet or other network.

According to certain example embodiments, an apparatus, such as a node, device, or a corresponding component, may be configured as circuitry, a computer or a microprocessor, such as single-chip computer element, or as a chipset, including at least a memory for providing storage capacity used for arithmetic operation and an operation processor for executing the arithmetic operation.

### Partial Glossary

- 3GPP: 3rd Generation Partnership Project
- 5G: 5th Generation
- 5GCN: 5G Core Network
- eNB: Enhanced Node B
- EN-DC: E-UTRA-NR Dual Connectivity
- En-gNB: E-UTRA-NR New Radio node
- E-UTRA: Evolved Universal Mobile Telecommunications System Terrestrial Radio Access
- gNB: 5G or Next Generation NodeB
- GPRS: General Packet Radio Service
- GTP-U: GPRS Tunneling Protocol for User Plane
- MeNB: Master eNB
- NR: New Radio
- PDN: Packet Data Network
- SGW: Serving Gateway
- TEID: Tunnel End Point Identifier
- UE: User Equipment

## Claims

1. A method for a secondary network node, comprising:
identifying a status of a user plane path between the secondary network node and a gateway node in a communication network as failed;
transmitting, to a master network node, the failed status of the user plane path when the failed status is identified; and
disconnecting a connection between the secondary network node and the master network node during a dual connectivity operation.

2. A method for a master network node, comprising:
triggering a secondary network node selection in a dual connectivity operation;
retrieving a status of a user plane path between the secondary network node and a gateway node in a communication network, the status being failed;
based on the received failed status,
determining whether an alternate secondary network node is available; and
based on the received status, triggering release of the dual connectivity operation to the secondary network node.

3. An apparatus, comprising means for performing:
identifying a status of a user plane path between the apparatus, acting as a secondary network node, and a gateway node in a communication network as failed;
transmitting, to a master network node, the failed status of the user plane path when the failed status is identified; and
disconnecting a connection between the apparatus and the master network node during a dual connectivity operation.

4. The apparatus according to claim 3, wherein the status is transmitted to the network node via a network node status indication message or a general packet radio service tunneling protocol for user plane status indication message.

5. The apparatus according to claim 4, wherein the general packet radio service tunneling protocol for user plane status indication message is a unicast message or a broadcast message.

6. The apparatus according to claim 4, wherein the network node status indication message comprises general packet radio service tunneling protocol for user plane path status information along with overload information.

7. The apparatus according to claim 4, wherein the network node status indication message comprises S1 user plane interface path status information to indicate an S1 user plane interface path status.

8. An apparatus, comprising means for performing:
triggering, by the apparatus acting as a master network node, a secondary network node selection in a dual connectivity operation;
retrieving a status of a user plane path between the secondary network node and a gateway node in a communication network, the status being failed;
based on the received failed status,
determining whether an alternate secondary network node is available; and
based on the received status, triggering release of the dual connectivity operation to the secondary network node.

9. The apparatus according to claim 8, wherein the means are further configured to perform:
wherein when it is determined that an alternate secondary network node is not available:
requesting a mobility management entity for a different gateway node, or continuing a connection with a master cell group bearer path.

10. The apparatus according to claim 9, wherein the means are further configured to perform:
wherein when it is determined that an alternative secondary network node is available: retrieving the status of the user plane path of the alternative secondary network node.

11. The apparatus according to any of claims 8-10, wherein the status is retrieved via a network node status indication message, or a general packet radio service tunneling protocol for user plane status indication message.

12. The apparatus according to claim 11, wherein the general packet radio service tunneling protocol for user plane status indication message is a unicast message or a broadcast message.

13. The apparatus according to claim 11, wherein the network node status indication message comprises general packet radio service tunneling protocol for user plane path status information along with overload information.

14. The apparatus according to claim 11, wherein the network node status indication message comprises S1 user plane interface path status information to indicate an S1 user plane interface path status.

## Patentansprüche

1. Verfahren für einen sekundären Netzwerkknoten, das Folgendes umfasst:
Identifizieren eines Status eines Benutzerebenenpfades zwischen dem sekundären Netzwerkknoten und einem Gatewayknoten in einem Kommunikationsnetzwerk als fehlgeschlagen;
Übertragen des fehlgeschlagenen Status des Benutzerebenenpfades zu einem Masternetzwerkknoten, wenn der fehlgeschlagene Status identifiziert ist; und
Trennen einer Verbindung zwischen dem sekundären Netzwerkknoten und dem Masternetzwerkknoten während einer dualen Konnektivitätsoperation.

2. Verfahren für einen Masternetzwerkknoten, das Folgendes umfasst:
Auslösen einer Auswahl eines sekundären Netzwerkknotens in einer dualen Konnektivitätsoperation;
Abrufen eines Status eines Benutzerebenenpfades zwischen dem sekundären Netzwerkknoten und einem Gatewayknoten in einem Kommunikationsnetzwerk, wobei der Status fehlgeschlagen ist;
auf Basis des empfangenen fehlgeschlagenen Status Bestimmen, ob ein alternativer sekundärer Netzwerkknoten verfügbar ist; und
auf Basis des empfangenen Status Auslösen einer Freigabe der dualen Konnektivitätsoperation zum sekundären Netzwerkknoten.

3. Vorrichtung, die Mittel zum Durchführen von Folgendem umfasst:
Identifizieren eines Status eines Benutzerebenenpfades zwischen der Vorrichtung, die als ein sekundärer Netzwerkknoten fungiert, und einem Gatewayknoten in einem Kommunikationsnetzwerk als fehlgeschlagen;
Übertragen des fehlgeschlagenen Status des Benutzerebenenpfades zu einem Masternetzwerkknoten, wenn der fehlgeschlagene Status identifiziert ist; und
Trennen einer Verbindung zwischen der Vorrichtung und dem Masternetzwerkknoten während einer dualen Konnektivitätsoperation.

4. Vorrichtung nach Anspruch 3, wobei der Status via eine Netzwerkknotenstatusanzeigenachricht oder ein allgemeines Paketfunkdiensttunnelprotokoll für eine Benutzerebenenstatusanzeigenachricht zum Netzwerkknoten übertragen wird.

5. Vorrichtung nach Anspruch 4, wobei das allgemeine Paketfunkdiensttunnelprotokoll für eine Benutzerebenenstatusanzeigenachricht eine Unicastnachricht oder eine Broadcastnachricht ist.

6. Vorrichtung nach Anspruch 4, wobei die Netzwerkknotenstatusanzeigenachricht ein allgemeines Paketfunkdiensttunnelprotokoll für Benutzerebenenpfadstatusinformationen zusammen mit Überlastungsinformationen umfasst.

7. Vorrichtung nach Anspruch 4, wobei die Netzwerkknotenstatusanzeigenachricht S1-Benutzerebenenschnittstellenpfadstatusinformationen umfasst, um einen S1-Benutzerebenenschnittstellenpfadstatus anzuzeigen.

8. Vorrichtung, die Mittel zum Durchführen von Folgendem umfasst:
Auslösen einer Auswahl eines sekundären Netzwerkknotens durch die Vorrichtung, die als ein Masternetzwerkknoten fungiert, in einer dualen Konnektivitätsoperation;
Abrufen eines Status eines Benutzerebenenpfades zwischen dem sekundären Netzwerkknoten und einem Gatewayknoten in einem Kommunikationsnetzwerk, wobei der Status fehlgeschlagen ist;
auf Basis des empfangenen fehlgeschlagenen Status Bestimmen, ob ein alternativer sekundärer Netzwerkknoten verfügbar ist; und
auf Basis des empfangenen Status Auslösen einer Freigabe der dualen Konnektivitätsoperation zum sekundären Netzwerkknoten.

9. Vorrichtung nach Anspruch 8, wobei die Mittel ferner dazu ausgelegt sind, Folgendes durchzuführen:
wobei, wenn bestimmt wird, dass ein alternativer sekundärer Netzwerkknoten nicht verfügbar ist:
Anfordern einer Mobilitätsverwaltungsentität für einen anderen Gatewayknoten oder Fortsetzen einer Verbindung mit einem Masterzellgruppenträgerpfad.

10. Vorrichtung nach Anspruch 9, wobei die Mittel ferner dazu ausgelegt sind, Folgendes durchzuführen:
wobei, wenn bestimmt wird, dass ein alternativer sekundärer Netzwerkknoten verfügbar ist: Abrufen des Status des Benutzerebenenpfades des alternativen sekundären Netzwerkknotens.

11. Vorrichtung nach einem der Ansprüche 8 bis 10, wobei der Status via eine Netzwerkknotenstatusanzeigenachricht oder ein allgemeines Paketfunkdiensttunnelprotokoll für eine Benutzerebenenstatusanzeigenachricht abgerufen wird.

12. Vorrichtung nach Anspruch 11, wobei das allgemeine Paketfunkdiensttunnelprotokoll für eine Benutzerebenenstatusanzeigenachricht eine Unicastnachricht oder eine Broadcastnachricht ist.

13. Vorrichtung nach Anspruch 11, wobei die Netzwerkknotenstatusanzeigenachricht ein allgemeines Paketfunkdiensttunnelprotokoll für Benutzerebenenpfadstatusinformationen zusammen mit Überlastungsinformationen umfasst.

14. Vorrichtung nach Anspruch 11, wobei die Netzwerkknotenstatusanzeigenachricht S1-Benutzerebenenschnittstellenpfadstatusinformationen umfasst, um einen S1-Benutzerebenenschnittstellenpfadstatus anzuzeigen.

## Revendications

1. Procédé pour un nœud de réseau secondaire, comprenant les étapes suivantes :
identifier un statut d'un chemin de plan utilisateur entre le nœud de réseau secondaire et un nœud de passerelle dans un réseau de communication comme étant en échec ;
transmettre, à un nœud de réseau maître, le statut d'échec du chemin de plan utilisateur lorsque le statut d'échec est identifié ; et
déconnecter une connexion entre le nœud de réseau secondaire et le nœud de réseau maître au cours d'une opération de double connectivité.

2. Procédé pour un nœud de réseau maître, comprenant les étapes suivantes :
déclencher une sélection de nœud de réseau secondaire dans une opération de double connectivité ;
récupérer un statut d'un chemin de plan utilisateur entre le nœud de réseau secondaire et un nœud de passerelle dans un réseau de communication, le statut étant échec ;
sur la base du statut d'échec reçu,
déterminer si un nœud de réseau secondaire alternatif est disponible ; et
sur la base du statut reçu, déclencher la libération de l'opération de double connectivité au nœud de réseau secondaire.

3. Appareil, comprenant des moyens pour effectuer ce qui suit :
identifier un statut d'un chemin de plan utilisateur entre l'appareil agissant en tant que nœud de réseau secondaire et un nœud de passerelle dans un réseau de communication comme étant en échec ;
transmettre, à un nœud de réseau maître, le statut d'échec du chemin de plan utilisateur lorsque le statut d'échec est identifié ; et
déconnecter une connexion entre l'appareil et le nœud de réseau maître au cours d'une opération de double connectivité.

4. Appareil selon la revendication 3, dans lequel le statut est transmis au nœud de réseau via un message d'indication de statut de nœud de réseau ou un protocole de tunnelisation de service radio par paquets général pour un message d'indication de statut de plan utilisateur.

5. Appareil selon la revendication 4, dans lequel le protocole de tunnelisation de service radio par paquets général pour un message d'indication de statut de plan utilisateur est un message de diffusion individuelle ou un message de diffusion générale.

6. Appareil selon la revendication 4, dans lequel le message d'indication de statut de nœud de réseau comprend un protocole de tunnelisation de service radio par paquets général pour des informations de statut de chemin de plan utilisateur ainsi que des informations de surcharge.

7. Appareil selon la revendication 4, dans lequel le message d'indication de statut de nœud de réseau comprend des informations de statut de chemin d'interface de plan utilisateur S1 pour indiquer un statut de chemin d'interface de plan utilisateur S1.

8. Appareil, comprenant des moyens pour effectuer ce qui suit :
déclencher, par l'appareil agissant en tant que nœud de réseau maître, une sélection de nœud de réseau secondaire dans une opération de double connectivité ;
récupérer un statut d'un chemin de plan utilisateur entre le nœud de réseau secondaire et un nœud de passerelle dans un réseau de communication, le statut étant échec ;
sur la base du statut d'échec reçu,
déterminer si un nœud de réseau secondaire alternatif est disponible ; et
sur la base du statut reçu, déclencher la libération de l'opération de double connectivité au nœud de réseau secondaire.

9. Appareil selon la revendication 8, dans lequel les moyens sont en outre configurés pour effectuer ce qui suit :
dans lequel, lorsqu'il est déterminé qu'un nœud de réseau secondaire alternatif n'est pas disponible :
demander à une entité de gestion de la mobilité un nœud de passerelle différent, ou poursuivre une connexion avec un chemin porteur de groupe de cellules maître.

10. Appareil selon la revendication 9, dans lequel les moyens sont en outre configurés pour effectuer ce qui suit :
dans lequel, lorsqu'il est déterminé qu'un nœud de réseau secondaire alternatif est disponible :
récupérer le statut du chemin de plan utilisateur du nœud de réseau secondaire alternatif.

11. Appareil selon l'une quelconque des revendications 8 à 10, dans lequel le statut est récupéré via un message d'indication de statut de nœud de réseau ou un protocole de tunnelisation de service radio par paquets général pour un message d'indication de statut de plan utilisateur.

12. Appareil selon la revendication 11, dans lequel le protocole de tunnelisation de service radio par paquets général pour un message d'indication de statut de plan utilisateur est un message de diffusion individuelle ou un message de diffusion générale.

13. Appareil selon la revendication 11, dans lequel le message d'indication de statut de nœud de réseau comprend un protocole de tunnelisation de service radio par paquets général pour des informations de statut de chemin de plan utilisateur ainsi que des informations de surcharge.

14. Appareil selon la revendication 11, dans lequel le message d'indication de statut de nœud de réseau comprend des informations de statut de chemin d'interface de plan utilisateur S1 pour indiquer un statut de chemin d'interface de plan utilisateur S1.
